# EUROPEAN PATENT APPLICATION

(11) **EP 4 802 901 A2**
(43) Date of publication of application: **09.09.2026**
(21) Application number: 26184296.7
(22) Date of filing: 09.01.2020
(51) Int. Cl.: A23K 20/105, A23K 20/189, A23K 40/00

(54) **ESSENTIAL OIL PARTICLES WITH IMPROVED STABILITY AND COMPOSITIONS THEREOF**

(30) Priority: 11.01.2019 US 201962791304 P
(62) Document number(s) of the earlier application(s) in accordance with Art. 76 EPC: 20738701.0 / 3 908 123
(71) Applicant: Novus International, Inc., Chesterfield, MO 63005 (US)
(72) Inventor: TUCKER, Heather, Chesterfield, MO 63005 (US); MALDONADO, Cristina, Chesterfield, MO 63005 (US); VISO, Antonio, Chesterfield, MO 63005 (US)
(74) Representative: Greaves Brewster LLP

(57) **Abstract**

A composition comprising a source of methionine and a plurality of agglomerated particles, the plurality of agglomerated particles comprising at least two essential oils dispersed in a matrix, wherein the matrix comprises at least one agglomerating agent comprising arabic gum, and the at least two essential oils consist of garlic oil and cinnamaldehyde.

## Description

### FIELD

The present disclosure provides essential oil compositions. Also provided are compositions and methods for improving the bioavailability of methionine. Said compositions comprise sources of methionine and the stabilized essential oil compositions, wherein said compositions improve animal health and performance.

### BACKGROUND

Essential oils are aromatic oily liquids obtained from plant material. It has been long recognized that some essential oils have antimicrobial, antibacterial, antioxidant, and/or anti-inflammatory effects. The volatile aromatic compounds present in essential oils, however, are chemically unstable and susceptible to oxidative deterioration, especially when exposed to oxygen, light, moisture, and heat. Similarly, the quality of a product fortified with the oils may deteriorate due to oxidative degradation, formation of unpleasant tastes and off-flavors, and the generation of free radicals. These changes have a negative effect on the shelf-stability, biological activity, and sensory properties of essential products. Attempts have been made to stabilize and protect essential oils through the use of functional coatings or encapsulation in shells. A need still exists, however, for improved means for protecting essential oils, especially when the essential oils are to be added to animal feeds or feed premixes.

### SUMMARY

One aspect of the present disclosure provides a composition comprising at least two essential oils dispersed in a matrix. In general, the matrix comprises at least one agglomerating agent in which the essential oils are dispersed or embedded. In certain embodiments, the essential oil composition comprises a plurality of agglomerated particles.

Another aspect of the present disclosure provides a composition comprising a source of methionine and a plurality of agglomerated particles, wherein the plurality of agglomerated particles comprise at least one essential oil and at least one agglomerating agent.

Also provided are methods of administering the composition to a subject to improve at least one performance parameter.

Other aspects and iterations of the disclosure are described in more detail below.

### BRIEF DESCRIPTION OF THE DRAWINGS

FIG. **1A** presents the level of propionate produced in a continuous culture system in the presence of MHA (left), agglomerated composition, Agg Comp (right), or MHA+Agg Comp (center). *P* = 0.0014.
FIG. **1B** shows the level of butyrate produced in a continuous culture system in the presence of MHA (left), Agg Comp (right), or MHA+Agg Comp (center). *P* = 0.0037
FIG. **1C** presents the level of acetate produced in a continuous culture system in the presence of MHA (left), Agg Comp (right), or MHA+Agg Comp (center).
FIG. **2A** shows the ratio of acetate:propionate produced in a continuous culture system in the presence of MHA (left), Agg Comp (right), or MHA+Agg Comp (center). *P* = 0.0070.
FIG. **2B** presents the total level of volatile fatty acids (VFA) produced in a continuous culture system in the presence of MHA (left), Agg Comp (right), or MHA+Agg Comp (center). *P* = 0.0756.

### DETAILED DESCRIPTION

The present disclosure provides agglomerated compositions comprising essential oils dispersed in matrices such that the essential oils have improved stability and extended shelf-life. Also provided by the present disclosure are compositions comprising a methionine source and the agglomerated essential oil compositions disclosed herein, as well as methods of using said compositions to improve animal health and performance.

### (I) Compositions Comprising Essential Oils

One aspect of the present disclosure provides compositions comprising essential oils dispersed in a matrix comprising one or more agglomerating agents. In general, the essential oils exist as droplets embedded in the matrix of agglomerating agent(s). The compositions disclosed herein, therefore, can be described as agglomerated compositions comprising small particles of essential oil and small particles of agglomerating agent, wherein the small particles are clustered together (agglomerated) into larger particles. In some embodiments, the essential oil compositions disclosed herein may be particulate, i.e., comprising a plurality of particles. In general, the essential oil compositions disclosed herein are devoid of coatings, outer shells, and/or hydrophobic layers.

### (I)(a) Essential oils

Essential oils, also known as volatile oils or ethereal oils, are concentrated hydrophobic liquids containing volatile aroma compounds obtained from fruits, seeds, flowers, bark, stems, roots, leaves, or other parts of a plant. Essential oils are generally obtained by distillation (e.g., steam distillation), solvent extraction, expression, and/or cold pressing. The specific chemical compound imparting the "essence of" of the plant's fragrance may be isolated from the plant, or it may be chemically synthesized. The term "essential oil" generally refers to the specific chemical compound of which the essential oil is composed, but can also refer to the oil of the plant from which it was extracted.

A variety of essential oils may be included in the compositions disclosed herein. Suitable essential oil compounds include allicin, amyl cinnamic aldehyde, amyl salicylate, anethole, anisic aldehyde, borneol, bornyl acetate, cadinene, camphene, camphor, carvacrol, carveol, carvone, cinnamaldehyde (or cinnamic aldehyde), cineol, citral, citronellal, citronellol, cuminic alcohol, cuminic aldehyde, cymene, dipentene, estragol, ethyl vanillin, eucalyptol, eugenol, eugenyl acetate, geraniol, geranyl acetate, guaiacol, isoeugenol, limonene, linalool, linalyl acetate, listea cubea, menthol, menthyl salicylate, methylchavicol, methyl salicylate, paracymene, perillaldehyde, phellandrene, pinene, piperonal, piperonyl acetate, piperonyl alcohol, pulegone, sabinene, terpinene, terpineol, terpinyl acetate, thujone, thymol, vanillin, and combinations thereof. Suitable essential oils also include aloe essential oil, angelica essential oil, anise essential oil, basil essential oil, bay essential oil, bergamot essential oil, birch essential oil, blueberry essential oil, bois de rose essential oil, cade essential oil, camphor essential oil, cananga essential oil, caraway essential oil, cardamom essential oil, carrot essential oil, cedar essential oil, cedarwood essential oil, celery essential oil, Chamaecyparis obtusa essential oil, chamomile essential oil, chive essential oil, cinnamon essential oil, citronella essential oil, clove essential oil, copaiba balsam essential oil, coriander essential oil, cumin essential oil, dill essential oil, eucalyptus essential oil, fennel essential oil, garlic essential oil, geranium essential oil, ginger essential oil, ginseng essential oil, grapefruit essential oil, guaiacwood essential oil, Hiba essential oil, ho camphor essential oil, hyssop essential oil, iris essential oil, Japanese mint essential oil, jasmine essential oil, juniper essential oil, laurel essential oil, lavender essential oil, leek essential oil, lemon essential oil, lemongrass essential oil, lime essential oil, linaloe essential oil, Lindera essential oil, marjoram essential oil, mandarin essential oil, mint essential oil, myrrh essential oil, myrthe essential oil, Neroli essential oil, nutmeg essential oil, oak essential oil, onion essential oil, orange essential oil, palmarosa essential oil, palmarosa sofia essential oil, papaya essential oi, paprika essential oil, parsley essential oil, patchouli essential oil, pepper essential oil, peppermint essential oil, perilla essential oil, Peru balsam essential oil, petitgrain essential oil, pine needle essential oil, red pepper essential oil, rose essential oil, rosemary essential oil, rosewood essential oil, sage essential oil, sandalwood essential oil, sesame essential oil, shallot essential oil, spearmint essential oil, spice plant essential oil, star anise essential oil, sweet orange essential oil, tangerine essential oil, tea seed essential oil, tea tree essential oil, thyme essential oil, tolu balsam essential oil, tuberose essential oil, turmeric essential oil, vetivert essential oil, Western mint essential oil, wintergreen essential oil, and combinations of any of the foregoing.

In general, the compositions disclosed herein comprise at least one essential oil. In some embodiments, the compositions may comprise two essential oils. In other embodiments, the compositions may comprise three essential oils. In still other embodiments, the compositions may comprise four essential oils. In yet additional embodiments, the compositions may comprise five, six, seven, or more than seven essential oils.

In particular embodiments, the agglomerated compositions disclosed herein may comprise or consist of two essential oils. For example, the two essential oils may be cinnamaldehyde and garlic oil. In other embodiments, the two essential oils may be thymol and carvacrol.

The amount of essential oils present in the agglomerated compositions can and will vary depending upon, for example, the identity of the essential oils. In general, the amount of essential oils present in the compositions disclosed herein may range from about 10% to about 50% by weight of the composition. In certain embodiments, the amount of essential oils present in the compositions may range from about 15% to about 30% by weight of the composition, or from about 20% to about 25% by weight of the composition. In specific embodiments, the amount of essential oils present in the agglomerated compositions may range from about 22% to about 23% by weight of the composition.

In embodiments in which the at least two essential oil comprise or consist of cinnamaldehyde and garlic oil, the ratio of cinnamaldehyde and garlic oil may range from about 5:1 to about 10:1, from about 6:1 to about 8:1, or from about 7:1. In some embodiments, the composition may comprise from about 17.5% to about 21.5% by weight of cinnamaldehyde and from about 2.5% to about 3.1% by weight of garlic oil about 2.8% by weight of garlic oil. In other embodiments, the composition may comprise from about 18.5% to about 20.5% by weight of cinnamaldehyde and from about 2.7% to about 2.9% by weight of garlic oil. In specific embodiments, the composition may comprise about 19.5% by weight of cinnamaldehyde and about 2.8% by weight of garlic oil.

### (I)(b) Matrix Comprising Agglomerating Agent

The compositions disclosed herein also comprise a matrix comprising at least one agglomerating agent in which the essential oils are dispersed or embedded. "Agglomerating agent" as used herein refers to any substance that produces bonding strength in agglomerated particles or forms bridges between the smaller particles of the agglomerated particle. Suitable agglomerating agents include complex carbohydrates, proteins, or combinations thereof.

Non-limiting examples of suitable complex carbohydrates include arabic gum, agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch (e.g., octenyl succinate anhydride (OSA) modified starch), tamarind gum, tara gum, tragacanth gum, welan gum, or xanthan gum. Suitable proteins include without limit collagen, gelatin, milk protein, egg protein, pea protein, soy protein, wheat protein, zein protein, isolates or hydrolysates of any of the foregoing, or modified versions of any of the foregoing.

In some embodiments, the agglomerating agent comprises arabic gum and maltodextrin or arabic gum and modified starch. In other embodiments, the agglomerating agent comprises starch, OSA modified starch, maltodextrin, and/or gelatin. In specific embodiments, the agglomerating agent comprises arabic gum.

The amount of agglomerating agent present in the agglomerated compositions can and will vary. In general, the amount of agglomerating agent in the composition may range from about 50% to about 90% by weight of the composition. In certain embodiments, the amount of agglomerating agent present in the compositions may range from about 60% to about 85% by weight of the composition, from about 65% to about 80%, or from about 70% to about 75% by weight of the composition. In specific embodiments, the amount of agglomerating agent present in the compositions may range from about 72% to about 73% by weight of the composition.

### (I)(c) Water

The agglomerated compositions disclosed herein also comprise water. In general, the amount of water is less than about 10% by weight. In some embodiments, the amount of water may range from about 2% to about 8%, or from about 4% to about 6%, as long as the total amount of essential oils, agglomerating agent(s), and water equals 100% by weight.

### (I)(d) Optional Excipients

In some embodiments, the agglomerated composition may comprise one or more optional excipients. Suitable excipients include antioxidants, surfactants, fillers, binders, or combinations thereof.

In specific embodiments, the optional excipient may be an antioxidant. The antioxidant may be natural or synthetics. Non-limiting examples of suitable antioxidants include ascorbyl palmitate, ascorbyl stearate, butylated hydroxyanisole (BHA), butylated hydroxytoluene (BHT), 6-ethoxy-1,2-dihydro-2,2,4-trimethylquinoline (ethoxyquin), ethyl gallate, propyl gallate, tertiary butyl hydroquinone (TBHQ), or combination thereof.

In other embodiments, the optional excipient may be a surfactant. The surfactant may be a nonionic surfactant, an anionic surfactant, or a cationic surfactant. Non-limiting examples of suitable nonionic surfactants (including zwitterionic surfactants that have no net charge) include alcohol ethoxylates, alkyl phenol ethoxylates (e.g., nonylphenyl ethoxylate), thiol ethoxylates, fatty acid ethoxylates, glycerol esters, hexitol esters, amine ethoxylates, alkylamide ethoxylates, and imide ethoxylates. Suitable anionic surfactants include, but are not limited to, alkyl sulfates, alkyl ether sulfates, sulfated alkanolamides, glyceride sulfates, dodecyl benzene sulfonates, alkylbenzene sulfonates, alpha olefin sulfonates, and sulfocarboxylic compounds. Non-limiting examples of suitable cationic surfactants include alkyl amines, quaternary alkyl ammoniums, ester amines, and ether amines. In some embodiments, the surfactant may be any of those disclosed in US Pat. Nos. 9,169,203, 9,902,690, or US Publication No. 2017/0002295, the disclosures of which are incorporated herein in their entireties.

In still other embodiments, the optional excipient may be a filler. Suitable fillers include without limit cellulose, microcrystalline cellulose, cellulose ethers (e.g., ethyl cellulose, methyl cellulose, hydroxypropyl cellulose, hydroxypropyl methylcellulose, sodium carboxymethylcellulose, etc.), cellulose esters (i.e., cellulose acetate, cellulose butyrate, and mixtures thereof), starches (e.g., corn starch, rice starch, potato starch, tapioca starch, and the like), modified starches, pregelatinized starches, phosphated starches, starch-lactose, starch-calcium carbonate, sodium starch glycolate, glucose, fructose, sucrose, lactose, xylose, lactitol, mannitol, malitol, sorbitol, xylitol, maltodextrin, trehalose, calcium carbonate, calcium sulfate, calcium phosphate, calcium silicate, magnesium carbonate, magnesium oxide, talc, or combinations thereof.

In further embodiments, the optional excipient may be a binder. Non-limiting examples of suitable binders include starches (e.g., corn starch, potato starch, wheat starch, rice starch, and the like), pregelatinized starch, hydrolyzed starch, cellulose, microcrystalline cellulose, cellulose derivatives (e.g., methylcellulose, ethylcellulose, hydroxypropylcellulose, hydroxypropylmethylcellulose, sodium carboxymethylcellulose, and the like), saccharides (e.g., sucrose, lactose, and so forth), sugar alcohols (e.g., maltitol, sorbitol, xylitol, polyethylene glycol, and the like), alginates (e.g., alginic acid, alginate, sodium alginate, and so forth), gums (e.g., gum arabic, guar gum, gellan gum, xanthan gum, and the like), pectins, gelatin, C12-C18 fatty acid alcohols, polyvinylpyrrolidinone (also called copovidone), polyethylene oxide, polyethylene glycol, polyvinyl alcohols, waxes (e.g., candelilla wax, carnauba wax, beeswax, and so forth), or combinations of any of the forgoing.

### (I)(e) Physical Form

In specific embodiments, the agglomerated compositions are particulate in form and comprise a plurality of particles. In general, the plurality of particles has an average particle size that is less than about 1000 micrometers (µm). In various embodiments, the average particle size of the plurality of particles ranges from about 10 to about 500 µm, from 50 µm to about 250 µm, or from about 100 µm to about 200 µm. In specific embodiments, the plurality of particles has an average particle size of about 150 µm.

### (II) Composition Comprising Methionine Source and Agglomerated Essential Oil Composition

Another aspect of the present disclosure encompasses compositions that comprise a methionine source and the agglomerated essential oil composition describe above. In particular, the compositions disclosed herein comprise a source of methionine and a plurality of agglomerated particles comprising at least one essential oil.

### (II)(a) Source of Methionine

The compositions disclosed herein comprise a source of methionine. The methionine may be natural, synthetic, or an analog thereof. The methionine may be D-methionine, L-methionine, or D,L-methionine, or analog of any of the foregoing.

In some embodiments, the source of methionine comprises compounds of Formula (I): 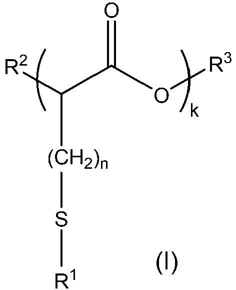 wherein:
R¹ is alkyl or substituted alkyl;
R² is NH₂ or OH;
R³ is hydrogen, alkyl, substituted alkyl, or a metal ion;
k is an integer of 1 or greater; and
n is an integer of 1 or greater.

In some embodiments, R¹ may be C₁ to C₆ alkyl or C₁ to C₆ substituted alkyl. The alkyl may be straight chain or branched. The substituted alkyl comprises a replacement of one or more carbon and/or hydrogen atoms with a nitrogen, oxygen, phosphorous, or halogen heteroatom. In various embodiments, R¹ may be methyl, ethyl, propyl, isopropyl, butyl, tert-butyl, hexyl, and the like. In other embodiments, R¹ may be methyl or ethyl. In specific embodiments, R¹ may be methyl.

In some embodiments, R³ may be hydrogen, C₁ to C₆ alkyl, C₁ to C₆ substituted alkyl, or a metal ion. The alkyl may be straight chain or branched. The substituted alkyl comprises a replacement of one or more carbon and/or hydrogen atoms with a nitrogen, oxygen, phosphorous, or halogen heteroatom. In some embodiments, R³ may be hydrogen. In other embodiments, R³ may be methyl, ethyl, propyl, isopropyl, butyl, tert-butyl, hexyl, and the like. In one embodiment, R³ may be isopropyl. In further embodiments, R³ may be a metal ion. The metal ion may be an alkali metal ion or an alkaline earth metal ion. For example, the metal ion may be calcium, chromium, cobalt, copper, iron, magnesium, manganese, silver, sodium, or zinc. The metal ion may be shared by more than one compound of Formula (I). In a particular embodiment, R³ may be calcium.

In certain embodiments, n may range from 1 to 10. In other embodiments, n may be 1, 2, 3, 4, or 5. In specific embodiments, n may be 1 or 2. In particular embodiments, n may be 2.

In general, k may range from 1 to about 100. In certain embodiments, k may range from 1 to about 50, from 1 to about 25, from 1 to about 20, from 1 to about 15, from 1 to about 10, from 1 to 9, from 1 to 8, from 1 to 7, from 1 to 6, from 1 to 5, from 1 to 4or from 1 to 3, or from 1 to 2. In some embodiments, k may be the same in every compound of the formulation (*e.g.*, k may be 1, k may be 2, *I*.). In other embodiments, k may differ between the compounds of the formulation (*e.g*., k may be 1-4, 1-10, 1-20, and so forth). In such embodiments, the compounds of Formula (I) comprise a mixture of monomer, dimers, trimers, tetramers, and longer oligomers.

In some embodiments, R¹ is methyl, R² is NH₂, R³ is hydrogen, n is 2, and k is 1 or k ranges from about 1-10. In specific embodiments, R¹ is methyl, R² is OH, R³ is hydrogen, n is 2, and k is 1 or k ranges from about 1-10.

The compounds of Formula (I) may have at least one chiral center, as denoted with an asterisk in the schematic below: 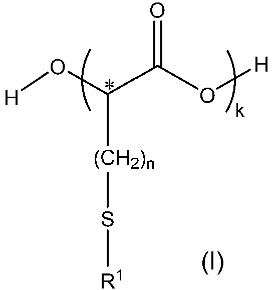 wherein R¹, k, and n are as defined above. Each chiral center may have an *R* or an *S* configuration. In compounds comprising one chiral carbon, the configuration may be *R* or *S*. In compounds comprising two or more chiral carbons, the configuration of each will be independently *R* or *S*. For example, in compounds comprising two chiral carbons, the configuration may be *RR*, *RS*, *SR*, or *SS*, in compounds comprising three chiral carbons, the configuration may be *RRR*, *RRS*, R*SR*, *RSS*, *SRR*, *SRS*, *SSR*, or *SSS*, and so forth.

The amount of the source of methionine present in the compositions disclosed herein can and will vary. In general, the concentration of the source of methionine may range from about 90% to about 99% by weight of the composition. In various embodiments, the composition may comprise about 90%, about 91%, about 92%, about 93%, about 94%, about 95%, about 96%, about 97%, about 98%, or about 99% by at least about 95%, at least about 96%, at least about 97%, about at least about 98%, at least about 99% by weight of the composition. In certain embodiments, the amount of the source of methionine in the composition may range from about 95% to about 98% or from about 96% to about 97% by weight of the composition.

### (II)(b) Agglomerated Essential Oil Composition

The compositions comprising the methionine source also comprise the agglomerated essential oil composition disclosed above in Section (I). In specific embodiments, the agglomerated composition comprises a plurality of particles comprising at least one essential oil. Exemplary agglomerated particles comprise essential oils such as cinnamaldehyde and garlic oil dispersed or embedded in a matrix of arabic gum.

In general, the amount of the agglomerated essential oil particles present in the compositions may range from about 1% to about 10% by weight of the composition. In certain embodiments, the composition may comprise about 1%, about 2%, about 3%, about 4%, about 5%, about 6%, about 7%, about 8%, about 9%, or about 10% by weight of the agglomerated essential oil particles. In specific embodiments, the amount of the agglomerated essential oil particles in the composition may range from about 2% to about 5% or from about 3% to about 4% by weight of the composition.

The amount of essential oils present in the methionine compositions may range from about 0.25% to about 2% by weight of the composition. In certain embodiments, the amount of essential oils present in the methionine compositions may range from about 0.25% to about 0.5%, from about 0.5% to about 1.0%, or from about 1% to about 2% by weight of the composition.

### (II)(c) Physical Form

In general, the compositions disclosed herein are solid in form. In various embodiments, the compositions may be powdered, granulated, pelleted, and so forth. In specific embodiments, the composition may be a free flowing powder.

### (II)(d) Exemplary Compositions

In some embodiments, exemplary compositions comprise compounds of Formula (I) in which R¹ is methyl, R² is OH, R³ is calcium, n is 2, and k is ≥ 1, and agglomerated particles comprising cinnamaldehyde and garlic oil dispersed or embedded in a matrix of arabic gum. The compositions comprise at least about 96.5% by weight of the compounds of Formula (I) and about 3.5% or less by weight of the agglomerated particles.

### (III) Methods for Preparing the Agglomerated Compositions

A further aspect of the present disclosure provides methods for preparing the agglomerated compositions described above in section (I). The agglomerate compositions may be prepared by methods of agglomeration known in the art, including spray drying, pan coating and spinning disk encapsulation, supercritical fluid encapsulation, air suspension agglomeration, fluidized bed agglomeration, spray cooling/chilling (including matrix particulation), extrusion, centrifugal extrusion, pellet mill, prilling, and hydrogel spray capture. In specific embodiments, the agglomerated compositions may be prepared by spray drying. For this, an emulsion comprising the essential oils, agglomerating agent(s), and water is prepared by stirring or mixing the components, the emulsion is sprayed through a nozzle thereby forming a liquid spray that is directed into a vessel in which hot air is blown (either co-current or counter current), thereby drying the liquid spray into dry particles or powder. The concentration of components in the emulsion may vary, e.g., the amount of water may be adjusted. The spray nozzle may be a rotary atomizer, rotary disc, high pressure swirl nozzle, or ultrasonic nozzle. The particle size distribution may be controlled by adjusting the aperture of the spray nozzle, the flow rate, and/or properties of the emulsion. In general, the spray drying process may proceed with an inlet temperature from about 160°C to about 200°C and an outlet temperature from about 75°C to about 110°C.

### (IV) Methods for Preparing the Compositions Comprising Methionine Source and Agglomerated Composition

Yet another aspect of the present disclosure provides methods for preparing the compositions comprising a source of methionine that are described above in section (II). In general, the methionine source may be blended with the essential oil agglomerated composition by mixing, roller mixing, drum mixing, shear mixing, blending, dry blending, chopping, milling, roller milling, granulating, dry granulating, wet granulating, fluid bed granulating, and other mixing techniques known in the art. Suitable ratios of the various components are detailed above in section (II).

### (V) Feed Premixes

Still another aspect of the present disclosure encompasses animal feed premixes or feed supplements comprising the compositions comprising a source of methionine described above in Section (II). Typically, the premix will be added to various feed formulations to formulate animal feed rations, as detailed below in Section (VI). As will be appreciated by the skilled artisan, the particular premix or supplement can and will vary depending upon the feed ration and animal that the feed ration will be fed to. Accordingly, the premixes or supplements may comprise a composition described in Section (II) and at least one additional agent.

Examples of suitable additional agents include vitamins, minerals, amino acids or amino acid analogs, antioxidants, organic acids, polyunsaturated fatty acids, enzymes, prebiotics, probiotics, postbiotics, herbs, pigments, approved antibiotics, or combinations thereof.

In some embodiments, the additional agents may be one or more vitamins. Suitable vitamins include vitamin A, vitamin B1 (thiamine), vitamin B2 (riboflavin), vitamin B3 (niacin), vitamin B5 (pantothenic acid), vitamin B6 (pyridoxine), vitamin B7 (biotin), vitamin B9 (folic acid), vitamin B12, vitamin C, vitamin D, vitamin E, vitamin K, other B-complex vitamins (e.g., choline, carnitine, adenine), or combinations thereof. The form of the vitamin may include salts of the vitamin, derivatives of the vitamin, compounds having the same or similar activity of a vitamin, and metabolites of a vitamin.

In further embodiments, the additional agent may be one or more amino acids. Non-limiting suitable amino acids include standard amino acids (i.e., alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, and valine), non-standard amino acids (e.g., L-DOPA, GABA, 2-aminobutyric acid, and the like), amino acid analogs (e.g., alpha hydroxy analogs), or combinations thereof.

In alternate embodiments, the additional agent may be one or more antioxidants. Suitable antioxidants include, but are not limited to, ascorbic acid and its salts, ascorbyl palmitate, ascorbyl stearate, anoxomer, N-acetylcysteine, benzyl isothiocyanate, m-aminobenzoic acid, o-aminobenzoic acid, p-aminobenzoic acid (PABA), butylated hydroxyanisole (BHA), butylated hydroxytoluene (BHT), caffeic acid, canthaxantin, alpha-carotene, beta-carotene, beta-caraotene, beta-apo-carotenoic acid, carnosol, carvacrol, catechins, cetyl gallate, chlorogenic acid, citric acid and its salts, clove extract, coffee bean extract, p-coumaric acid, 3,4-dihydroxybenzoic acid, N,N'-diphenyl-p-phenylenediamine (DPPD), dilauryl thiodipropionate, distearyl thiodipropionate, 2,6-di-tert-butylphenol, dodecyl gallate, edetic acid, ellagic acid, erythorbic acid, sodium erythorbate, esculetin, esculin, 6-ethoxy-1,2-dihydro-2,2,4-trimethylquinoline (ethoxyquin), ethyl gallate, ethyl maltol, ethylenediaminetetraacetic acid (EDTA), eucalyptus extract, eugenol, ferulic acid, flavonoids (e.g., catechin, epicatechin, epicatechin gallate, epigallocatechin (EGC), epigallocatechin gallate (EGCG), polyphenol epigallocatechin-3-gallate, flavones (e.g., apigenin, chrysin, luteolin), flavonols (e.g., datiscetin, myricetin, daemfero), flavanones, fraxetin, fumaric acid, gallic acid, gentian extract, gluconic acid, glycine, gum guaiacum, hesperetin, alpha-hydroxybenzyl phosphinic acid, hydroxycinammic acid, hydroxyglutaric acid, hydroquinone, n-hydroxysuccinic acid, hydroxytryrosol, hydroxyurea, rice bran extract, lactic acid and its salts, lecithin, lecithin citrate; R-alpha-lipoic acid, lutein, lycopene, malic acid, maltol, 5-methoxy tryptamine, methyl gallate, monoglyceride citrate; monoisopropyl citrate; morin, beta-naphthoflavone, nordihydroguaiaretic acid (NDGA), octyl gallate, oxalic acid, palmityl citrate, phenothiazine, phosphatidylcholine, phosphoric acid, phosphates, phytic acid, phytylubichromel, pimento extract, propyl gallate, polyphosphates, quercetin, trans-resveratrol, rosemary extract, rosmarinic acid, sage extract, sesamol, silymarin, sinapic acid, succinic acid, stearyl citrate, syringic acid, tartaric acid, thymol, tocopherols (i.e., alpha-, beta-, gamma- and delta-tocopherol), tocotrienols (i.e., alpha-, beta-, gamma- and delta-tocotrienols), tyrosol, vanilic acid, 2,6-di-tert-butyl-4-hydroxymethylphenol (i.e., Ionox 100), 2,4-(tris-3',5'-bi-tert-butyl-4'-hydroxybenzyl)-mesitylene (i.e., Ionox 330), 2,4,5-trihydroxybutyrophenone, ubiquinone, tertiary butyl hydroquinone (TBHQ), thiodipropionic acid, trihydroxy butyrophenone, tryptamine, tyramine, uric acid, vitamin K and derivatives thereof, vitamin Q10, wheat germ oil, zeaxanthin, or combinations thereof.

In still other embodiments, the additional agent may be one or more organic acids. The organic acid may be a carboxylic acid or a substituted carboxylic acid. The carboxylic acid may be a mono-, di-, or tri-carboxylic acid. In general, the carboxylic acid may contain from about one to about twenty-two carbon atoms. Suitable organic acids, by way of non-limiting example, include acetic acid, adipic acid, butanoic acid, benzoic acid, cinnamaldehyde, citric acid, formic acid, fumaric acid, glutaric acid, glycolic acid, lactic acid, malic acid, mandelic acid, propionic acid, sorbic acid, succinic acid, tartaric acid, or combinations thereof. Salts of organic acids comprising carboxylic acids are also suitable for certain embodiments. Representative suitable salts include the ammonium, magnesium, calcium, lithium, sodium, potassium, selenium, iron, copper, and zinc salts of organic acids.

In yet other embodiments, the additional agent may be one or more polyunsaturated fatty acids. Suitable polyunsaturated fatty acids (PUFAs) include long chain fatty acids with at least 18 carbon atoms and at least two carbon-carbon double bonds, generally in the cis-configuration. In specific embodiments, the PUFA may be an omega fatty acid. The PUFA may be an omega-3 fatty acid in which the first double bond occurs in the third carbon-carbon bond from the methyl end of the carbon chain (i.e., opposite the carboxyl acid group). Suitable examples of omega-3 fatty acids include all-cis 7,10,13-hexadecatrienoic acid; all-cis-9,12,15-octadecatrienoic acid (alpha-linolenic acid, ALA); all-cis-6,9,12,15,-octadecatetraenoic acid (stearidonic acid); all-cis-8,11,14,17-eicosatetraenoic acid (eicosatetraenoic acid); all-cis-5,8,11,14,17-eicosapentaenoic acid (eicosapentaenoic acid, EPA); all-cis-7,10,13,16,19-docosapentaenoic acid (clupanodonic acid, DPA); all-cis-4,7,10,13,16,19-docosahexaenoic acid (docosahexaenoic acid, DHA); all-cis-4,7,10,13,16,19-docosahexaenoic acid; and all-cis-6,9,12,15,18,21-tetracosenoic acid (nisinic acid). In an alternative embodiment, the PUFA may be an omega-6 fatty acid in which the first double bond occurs in the sixth carbon-carbon bond from the methyl end of the carbon chain. Examples of omega-6 fatty acids include all-cis-9,12-octadecadienoic acid (linoleic acid); all-cis-6,9,12-octadecatrienoic acid (gamma-linolenic acid, GLA); all-cis-11,14-eicosadienoic acid (eicosadienoic acid); all-cis-8,11,14-eicosatrienoic acid (dihomo-gamma-linolenic acid, DGLA); all-cis-5,8,11,14-eicosatetraenoic acid (arachidonic acid, AA); all-cis-13,16-docosadienoic acid (docosadienoic acid); all-cis-7,10,13,16-docosatetraenoic acid (adrenic acid); and all-cis-4,7,10,13,16-docosapentaenoic acid (docosapentaenoic acid). In yet another alternative embodiment, the PUFA may be an omega-9 fatty acid in which the first double bond occurs in the ninth carbon-carbon bond from the methyl end of the carbon chain, or a conjugated fatty acid, in which at least one pair of double bonds are separated by only one single bond. Suitable examples of omega-9 fatty acids include cis-9-octadecenoic acid (oleic acid); cis-11-eicosenoic acid (eicosenoic acid); all-cis-5,8,11-eicosatrienoic acid (mead acid); cis-13-docosenoic acid (erucic acid), and cis-15-tetracosenoic acid (nervonic acid). Examples of conjugated fatty acids include 9Z,11E-octadeca-9,11-dienoic acid (rumenic acid); 10E,12Z-octadeca-9,11-dienoic acid; 8E,10E,12Z-octadecatrienoic acid (α-calendic acid); 8E,10E,12E-octadecatrienoic acid (ß-Calendic acid); 8E,10Z,12E-octadecatrienoic acid (jacaric acid); 9E,11E,13Z-octadeca-9,11,13-trienoic acid (α-eleostearic acid); 9E,11E,13E-octadeca-9,11,13-trienoic acid (ß-eleostearic acid); 9Z,11Z,13E-octadeca-9,11,13-trienoic acid (catalpic acid), and 9E,11Z,13E-octadeca-9,11,13-trienoic acid (punicic acid).

In still other embodiments, the additional agent may be one or more probiotics, prebiotics, or postbiotics. Probiotics, prebiotics, and postbiotics include agents derived from yeast or bacteria that promote good digestive health. By way of non-limiting example, yeast-derived probiotics, prebiotics, and postbiotics include yeast cell wall derived components such as β-glucans, arabinoxylan isomaltose, agarooligosaccharides, lactosucrose, cyclodextrins, lactose, fructooligosaccharides, laminariheptaose, lactulose, β-galactooligosaccharides, mannanoligosaccharides, raffinose, stachyose, oligofructose, glucosyl sucrose, sucrose thermal oligosaccharide, isomalturose, caramel, inulin, and xylooligosaccharides. In an exemplary embodiment, the yeast-derived agent may be β-glucans and/or mannanoligosaccharides. Sources for yeast cell wall derived components include Saccharomyces bisporus, Saccharomyces boulardii, Saccharomyces cerevisiae, Saccharomyces capsularis, Saccharomyces delbrueckii, Saccharomyces fermentati, Saccharomyces lugwigii, Saccharomyces microellipsoides, Saccharomyces pastorianus, Saccharomyces rosei, Candida albicans, Candida cloaceae, Candida tropicalis, Candida utilis, Geotrichum candidum, Hansenula americana, Hansenula anomala, Hansenula wingei, and Aspergillus oryzae. Probiotics, prebiotics, and postbiotics may also include bacteria cell wall derived agents such as peptidoglycan and other components derived from gram-positive bacteria with a high content of peptidoglycan. Exemplary gram-positive bacteria include Lactobacillus acidophilus, Bifedobact thermophilum, Bifedobat longhum, Streptococcus faecium, Bacillus pumilus, Bacillus subtilis, Bacillus licheniformis, Lactobacillus acidophilus, Lactobacillus casei, Enterococcus faecium, Bifidobacterium bifidium, Propionibacterium acidipropionici, Propionibacteriium freudenreichii, and Bifidobacterium pseudolongum.

In alternate embodiments, the additional agent may be one or more enzymes or enzyme variants. Suitable non-limiting examples of enzymes include amylases, carbohydrases, cellulases, esterases, galactonases, galactosidases, glucanases, hemicellulases, hydrolases, lipases, oxidoreductases, pectinases, peptidases, phosphatases, phospholipases, phytases, proteases, transferases, xylanases, or combinations thereof.

In further embodiments, the additional agent may be one or more herbals. Suitable herbals and herbal derivatives, as used herein, refer to herbal extracts, and substances derived from plants and plant parts, such as leaves, flowers, and roots, without limitation. Non-limiting exemplary herbals and herbal derivatives include agrimony, alfalfa, aloe vera, amaranth, angelica, anise, barberry, basil, bayberry, bee pollen, birch, bistort, blackberry, black cohosh, black walnut, blessed thistle, blue cohosh, blue vervain, boneset, borage, buchu, buckthorn, bugleweed, burdock, capsicum, cayenne, caraway, cascara sagrada, catnip, celery, centaury, chamomile, chaparral, chickweed, chicory, chinchona, cloves, coltsfoot, comfrey, cornsilk, couch grass, cramp bark, culver's root, cyani, cornflower, damiana, dandelion, devils claw, dong quai, echinacea, elecampane, ephedra, eucalyptus, evening primrose, eyebright, false unicorn, fennel, fenugreek, figwort, flaxseed, garlic, gentian, ginger, ginseng, golden seal, gotu kola, gum weed, hawthorn, hops, horehound, horseradish, horsetail, hoshouwu, hydrangea, hyssop, iceland moss, irish moss, jojoba, juniper, kelp, lady's slipper, lemon grass, licorice, lobelia, mandrake, marigold, marjoram, marshmallow, mistletoe, mullein, mustard, myrrh, nettle, oatstraw, oregon grape, papaya, parsley, passion flower, peach, pennyroyal, peppermint, periwinkle, plantain, pleurisy root, pokeweed, prickly ash, psyllium, quassia, queen of the meadow, red clover, red raspberry, redmond clay, rhubarb, rose hips, rosemary, rue, safflower, saffron, sage, St. John's wort, sarsaparilla, sassafras, saw palmetto, scullcap, senega, senna, shepherd's purse, slippery elm, spearmint, spikenard, squawvine, stillingia, strawberry, taheebo, thyme, uva ursi, valerian, violet, watercress, white oak bark, white pine bark, wild cherry, wild lettuce, wild yam, willow, wintergreen, witch hazel, wood betony, wormwood, yarrow, yellow dock, yerba santa, yucca, or combinations thereof.

In still other embodiments, the additional agent may be one or more natural pigments. Suitable pigments include, without limit, actinioerythrin, alizarin, alloxanthin, β-apo-2'-carotenal, apo-2-lycopenal, apo-6'-lycopenal, astacein, astaxanthin, azafrinaldehyde, aacterioruberin, aixin, α-carotine, β-carotine, γ-carotine, β-carotenone, canthaxanthin, capsanthin, capsorubin, citranaxanthin, citroxanthin, crocetin, crocetinsemialdehyde, crocin, crustaxanthin, cryptocapsin, α-cryptoxanthin, β-cryptoxanthin, cryptomonaxanthin, cynthiaxanthin, decaprenoxanthin, dehydroadonirubin, diadinoxanthin, 1,4-diamino-2,3-dihydroanthraquinone, 1,4-dihydroxyanthraquinone, 2,2'-diketospirilloxanthin, eschscholtzxanthin, eschscholtzxanthone, flexixanthin, foliachrome, fucoxanthin, gazaniaxanthin, hexahydrolycopene, hopkinsiaxanthin, hydroxyspheriodenone, isofucoxanthin, loroxanthin, lutein, luteoxanthin, lycopene, lycopersene, lycoxanthin, morindone, mutatoxanthin, neochrome, neoxanthin, nonaprenoxanthin, OH-Chlorobactene, okenone, oscillaxanthin, paracentrone, pectenolone, pectenoxanthin, peridinin, phleixanthophyll, phoeniconone, phoenicopterone, phoenicoxanthin, physalien, phytofluene, pyrrhoxanthininol, quinones, rhodopin, rhodopinal, rhodopinol, rhodovibrin, rhodoxanthin, rubixanthone, saproxanthin, semi-α-carotenone, semi-β-carotenone, sintaxanthin, siphonaxanthin, siphonein, spheroidene, tangeraxanthin, torularhodin, torularhodin methyl ester, torularhodinaldehyde, torulene, 1,2,4-trihydroxyanthraquinone, triphasiaxanthin, trollichrome, vaucheriaxanthin, violaxanthin, wamingone, xanthin, zeaxanthin, α-zeacarotene, or combinations thereof.

In yet other embodiments, the additional agent may be one or more antibiotics approved for use in livestock and poultry (i.e., antibiotics not considered critical or important for human health). Non-limiting examples of approved antibiotics include bacitracin, carbadox, ceftiofur, enrofloxacin, florfenicol, laidlomycin, linomycin, oxytetracycline, roxarsone, tilmicosin, tylosin, and virginiamycin.

### (VI) Feed Rations

Yet another aspect of the present disclosure encompasses animal feed rations comprising the compositions described in Section (II) or a feed premix as described in Section (V), as well as nutritional agents that provide protein, carbohydrate, and/or fat to the animal

Feed ingredients that may be utilized in the present disclosure to satisfy an animal's maintenance energy requirements may include feed ingredients that are commonly provided to animals for consumption. Examples of such feed ingredients include grains, forage products, feed meals, feed concentrates, and the like.

Suitable grains include corn, corn gluten meal, soybeans, soybean meal, wheat, barley, oats, sorghum, rye, rice, and other grains, and grain meals.

Forage products are feed ingredients such as vegetative plants in either a fresh (pasture grass or vegetation), dried, or ensiled state and may incidentally include minor proportions of grain (e.g., kernels of corn that remain in harvested corn plant material after harvest). Forage includes plants that have been harvested and optionally fermented prior to being provided to ruminants as a part of their diet. Thus, forage includes hay, haylage, and silage. Examples of hay include harvested grass, either indigenous to the location of the ruminants being fed or shipped to the feeding location from a remote location. Non-limiting examples of hay include alfalfa, Bermuda grass, bahia grass, limpo grass, rye grass, wheat grass, fescue, clover, and the like as well as other grass varieties that may be native to the location of the ruminants being provided the ruminant feed ration.

It is beneficial if the forage is relatively high quality (i.e., contains relatively levels of metabolizable nutrients which permit the animal to satisfy its nutrient and maintenance energy requirements before reaching its consumption capacity). If the forage is of low quality, the animal may not metabolize it adequately to achieve desired performance effects (e.g., satisfy its nutrient and/or maintenance energy requirements), not only compromising the nutritional benefit from the forage *per se*, but also causing the animal to feel full or bloated, and possibly deterring it from consuming sufficient nutrients.

Haylage is a forage product that has been naturally fermented by harvesting a hay crop while the sap is still in the plant. The harvested hay or hay bales are then stored in an air-tight manner in which fermentation can occur. The fermentation process converts the sugars in the plants into acids which lower the pH of the harvested hay and preserves the forage.

Silage, similar to haylage, is a forage product that is produced from the harvest, storage and fermentation of green forage crops such as corn and grain sorghum plants. These crops are chopped, stems and all, before the grain is ready for harvest. The plant material is stored in silos, storage bags, bunkers, or covered piles causing the material to ferment, thereby lowering the pH and preserving the plant material until it can be fed.

Forage products also include high fiber sources and scrap vegetation products such as green chop, corncobs, plant stalks, and the like.

Feed concentrates are feedstuffs that are high in energy and low in crude fiber. Concentrates also include a source of one or more ingredients that are used to enhance the nutritional adequacy of a feed supplement mix, such as vitamins and minerals.

The feed ration may be supplemented with a fat source. Non-limiting fats include plant oils, fish oils, animal fats, yellow grease, fish meal, oilseeds, distillers' grains, or combinations thereof. The fat source will generally comprise from about 1% to about 10% of the dry mass of the total feed ration, more preferably from about 2% to about 6%, and most preferably from about 3% to about 4%.

Feed rations of the present disclosure typically are formulated to meet the nutrient and energy demands of a particular animal. The nutrient and energy content of many common animal feed ingredients have been measured and are available to the public. The National Research Council has published books that contain tables of common ruminant feed ingredients and their respective measured nutrient and energy content. Additionally, estimates of nutrient and maintenance energy requirements are provided for growing and finishing cattle according to the weight of the cattle. National Academies of Sciences, Engineering, and Medicine. 2016. Nutrient Requirements of Beef Cattle: Eighth Revised Edition. Washington, DC: The National Academies Press, pp. 396-403, which is incorporated herein in its entirety. This information can be utilized by one skilled in the art to estimate the nutritional and maintenance energy requirements of animal and determine the nutrient and energy content of animal feed ingredients.

### (VII) Methods for Improving Animal Health and Performance

Yet another aspect of the present disclosure encompasses methods of providing the compositions disclosed herein to animals for improving animal health and performance. In some embodiments, the method comprises administering any of the compositions described above in Section (II), any of the feed premixes described in section (V), or any of the feed rations described in section (VI) for increasing methionine bioavailability, wherein increased methionine bioavailability is assessed by an improvement in at least one animal performance parameter. Suitable performance parameters include increased weight gain, increased feed conversion ratios, increased muscle mass, increased milk production, etc. as compared to animals that were administered only a source of methionine.

In other embodiments, the method comprises administering any of the compositions described above in Section (II), any of the feed premixes described in section (V), or any of the feed rations described in section (VI) to a ruminant for increasing fermentation in the ruminant, wherein increased fermentation is assessed by increased levels of volatile fatty acids as compared to ruminants that were administered only a source of methionine.

In additional embodiments, the method comprises administering any of the compositions described above in Section (II), any of the feed premixes described in section (V), or any of the feed rations described in section (VI) to lactating ruminants for increasing milk protein content and/or milk yield as compared to lactating ruminants that were administered only a source of methionine.

The amount of the composition, feed premix, feed ration administered to the animal can and will vary depending on the type of animal, age and/or sex of the animal, and overall health of the animal. Those of skill in the art are familiar with methods for determining the suitable amounts to be administered to the animal of interest.

Suitable animals include, but are not limited to, livestock or agricultural animals, companion animals, zoological animals, and research animals. In one embodiment, the animal may be a livestock or agricultural animal. Non-limiting examples of suitable livestock or agricultural animals may include cows, cattle, pigs, goats, sheep, poultry, llamas, alpacas, aquatic animals (e.g., farmed fish and shellfish), and the like. In yet another embodiment, the subject may be a companion animal. Non-limiting examples of companion animals may include pets such as dogs, cats, horses, rabbits, and birds. In yet another embodiment, the subject may be a zoological animal. As used herein, a "zoological animal" refers to an animal that may be found in a zoo. Such animals may include non-human primates, large cats, wolves, bears, hippos, kangaroos, etc. In still another embodiment, the animal may be a research or laboratory animal. Non-limiting examples of a research of laboratory animal include rodents (e.g., mice, rats, guinea pigs, hamsters, etc.), canines, felines, and non-human primates. In certain embodiments, the animal may be bovine, porcine, equine, ovine, or poultry. In other embodiments, the animal may be a ruminant, such as cattle, sheep, or goat. In one embodiment, the animal may be bovine. In another embodiment, the animal may be a non-ruminant, such as pigs or poultry.

### (VIII) Specific Compositions and Methods of the Disclosure

Accordingly, the present disclosure relates to the following non-limiting compositions and methods.

In a first composition, Composition 1, the present disclosure provides a composition comprising at least two essential oils dispersed in a matrix.

In another composition, Composition 2, the present disclosure provides a composition, as provided in Composition 1, wherein the at least two essential oils are chosen from allicin, amyl cinnamic aldehyde, amyl salicylate, anethole, anisic aldehyde, borneol, bornyl acetate, cadinene, camphene, camphor, carvacrol, carveol, carvone, cinnamaldehyde, cineol, citral, citronellal, citronellol, cuminic alcohol, cuminic aldehyde, cymene, dipentene, estragol, ethyl vanillin, eucalyptol, eugenol, eugenyl acetate, geraniol, geranyl acetate, guaiacol, isoeugenol, limonene, linalool, linalyl acetate, listea cubea, menthol, menthyl salicylate, methylchavicol, methyl salicylate, paracymene, perillaldehyde, phellandrene, pinene, piperonal, piperonyl acetate, piperonyl alcohol, pulegone, sabinene, terpinene, terpineol, terpinyl acetate, thujone, thymol, vanillin, or combinations thereof.

In another composition, Composition 3, the present disclosure provides a composition, as provided in Compositions 1 or 2, wherein the at least two essential oils are cinnamaldehyde and garlic oil.

In another composition, Composition 4, the present disclosure provides a composition, as provided in Composition 2, wherein cinnamaldehyde and garlic oil are present at a ratio of about 7 to 1.

In another composition, Composition 5, the present disclosure provides a composition, as provided in any one of Compositions 1 to 4, wherein the matrix comprises an agglomerating agent chosen from a complex carbohydrate, a protein, or a combination thereof.

In another composition, Composition 6, the present disclosure provides a composition, as provided in Composition 5, wherein the complex carbohydrate is chosen from arabic gum, agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum.

In another composition, Composition 7, the present disclosure provides a composition, as provided in Composition 5, wherein the protein is chosen from collagen, gelatin, milk protein, egg protein, pea protein, soy protein, wheat protein, zein protein, isolate or hydrolysate of any of the foregoing, or modified version of any of the foregoing.

In another composition, Composition 8, the present disclosure provides a composition, as provided in any one of Compositions 1 to 5, wherein the matrix comprises arabic gum.

In another composition, Composition 9, the present disclosure provides a composition, as provided in any one of Compositions 1 to 8, wherein the at least two essential oils are present in an amount from about 10% to about 50% by weight based on the total weight of the composition, and the matrix is present in an amount from about 50% to about 90% by weight based on the total weight of the composition.

In another composition, Composition 10, the present disclosure provides a composition, as provided in any one of Compositions 1 to 9, wherein the at least two essential oils are present in an amount from about 20% to about 25% by weight of the composition, and the matrix is present in an amount from about 65% to about 80% by weight of the composition.

In another composition, Composition 11, the present disclosure provides a composition, as provided in any one of Compositions 1 to 10, further comprising less than about 10% of water by weight, wherein the total amount of the at least two essential oils, the matrix, and water equals 100% by weight.

In another composition, Composition 12, the present disclosure provides a composition, as provided in any one of Compositions 1 to 11, wherein the composition comprises particles.

In another composition, Composition 13, the present disclosure provides a composition, as provided in Composition 12, wherein the particles have an average diameter particle size from about 10 micrometers to about 500 micrometers.

In another composition, Composition 14, the present disclosure provides a composition, as provided in Composition 12 or 13, wherein the particles have an average diameter particle size of about 150 micrometers.

In another composition, Composition 15, the present disclosure provides a composition, as provided in any one of Compositions 1 to 14, which is prepared by spray drying an emulsion comprising the at least two essential oils, the matrix, and water with a rotary atomizer.

In another composition, Composition 16, the present disclosure provides a composition comprising a source of methionine and a plurality of agglomerated particles, the plurality of agglomerated particles comprising at least one essential oil.

In another composition, Composition 17, the present disclosure provides a composition, as provided in Composition 16, wherein the source of methionine comprises compounds of Formula (I): 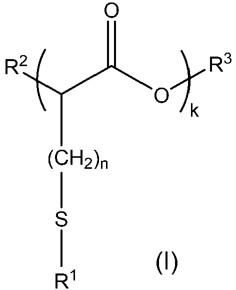 wherein, R¹ is methyl or ethyl; R² is NH₂ or OH; R³ is hydrogen, C₁-C₆ alkyl, or a metal ion; k is an integer from 1 to 10; and n is an integer of 1 or 2.

In another composition, Composition 18, the present disclosure provides a composition, as provided in Composition 17, wherein the metal ion at R³ is calcium, chromium, cobalt, copper, iron, magnesium, manganese, silver, sodium, or zinc a source of methionine and at least two essential oils.

In another composition, Composition 19, the present disclosure provides a composition, as provided in Compositions 17 or 18, wherein R¹ is methyl and n is 2.

In another composition, Composition 20, the present disclosure provides a composition, as provided in any one of Compositions 17 to 19, wherein R² is OH.

In another composition, Composition 21, the present disclosure provides a composition, as provided in any one of Compositions 17 to 20, wherein k is from 1 to 5.

In another composition, Composition 22, the present disclosure provides a composition, as provided in any one of Compositions 17 to 21, wherein k is 1.

In another composition, Composition 27, the present disclosure provides a composition, as provided in Composition 26, wherein the complex carbohydrate is chosen from arabic gum, agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum.

In another composition, Composition 23, the present disclosure provides a composition, as provided in any one of Compositions 17 to 22, wherein R³ is calcium.

In another composition, Composition 24, the present disclosure provides a composition, as provided in any one of Compositions 16 to 23, wherein the at least one essential oil is chosen from allicin, amyl cinnamic aldehyde, amyl salicylate, anethole, anisic aldehyde, borneol, bornyl acetate, cadinene, camphene, camphor, carvacrol, carveol, carvone, cinnamaldehyde, cineol, citral, citronellal, citronellol, cuminic alcohol, cuminic aldehyde, cymene, dipentene, estragol, ethyl vanillin, eucalyptol, eugenol, eugenyl acetate, geraniol, geranyl acetate, guaiacol, isoeugenol, limonene, linalool, linalyl acetate, listea cubea, menthol, menthyl salicylate, methylchavicol, methyl salicylate, paracymene, perillaldehyde, phellandrene, pinene, piperonal, piperonyl acetate, piperonyl alcohol, pulegone, sabinene, terpinene, terpineol, terpinyl acetate, thujone, thymol, vanillin, or combinations thereof.

In another composition, Composition 25, the present disclosure provides a composition, as provided in any one of Compositions 16 to 24, wherein the plurality of agglomerated particles further comprises at least one agglomerating agent.

In another composition, Composition 26, the present disclosure provides a composition, as provided in Composition 25, wherein the agglomerating agent is a complex carbohydrate, a protein, or a combination thereof.

In another composition, Composition 27, the present disclosure provides a composition, as provided in Composition 26, wherein the complex carbohydrate is chosen from arabic gum, agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum.

In another composition, Composition 28, the present disclosure provides a composition, as provided in any one of Compositions 26 or 27, wherein the protein is chosen from collagen, gelatin, milk protein, egg protein, pea protein, soy protein, wheat protein, zein protein, isolate or hydrolysate of any of the foregoing, or modified version of any of the foregoing.

In another composition, Composition 29, the present disclosure provides a composition, as provided in any one of Compositions 25 to 28, wherein the agglomerating agent is arabic gum.

In another composition, Composition 30, the present disclosure provides a composition, as provided in any one of Compositions 16 to 29, wherein the source of methionine is present in an amount from about 90% to about 99% by weight of the composition, and the plurality of agglomerated articles is present in an amount from about 1% to about 10% by weight of the composition.

In another composition, Composition 31, the present disclosure provides a composition, as provided in any one of Compositions 16 to 30, wherein the source of methionine is present in an amount from about 96% to about 99% by weight of the composition, and the plurality of agglomerated particles is present in an amount from about 1% to about 4% by weight of the composition.

In another composition, Composition 32, the present disclosure provides a composition, as provided in any one of Compositions 16 to 31, wherein the at least one essential oil is present in an amount from about 0.25% to about 2% by weight of the composition.

In another composition, Composition 33, the present disclosure provides a composition, as provided in any one of Compositions 16 to 32, wherein the at least one essential oil comprises cinnamaldehyde and garlic oil.

In another composition, Composition 34, the present disclosure provides a composition, as provided in any one of Compositions 16 to 32, wherein the at least one essential oil consists of cinnamaldehyde and garlic oil.

In another composition, Composition 35, the present disclosure provides a composition, as provided in any one of Compositions 16 to 34, wherein the source of methionine is 2-hydroxy-4-(methylthio)butanoic acid calcium salt.

In another composition, Composition 36, the present disclosure provides a composition, as provided in any one of Compositions 16 to 35, which is a free flowing powder.

In another composition, Composition 37, the present disclosure provides a feed premix comprising the composition of any one of Compositions 16 to 36.

In another composition, Composition 38, the present disclosure provides a feed premix, as provided in Composition 37, wherein the feed premix further comprises at least one agent chosen from vitamins, minerals, amino acids, amino acid analogs, antioxidants, organic acids, polyunsaturated fatty acids, enzymes, prebiotics, probiotics, postbiotics, herbs, pigments, pharmaceutically active agents, or combinations thereof.

In another composition, Composition 39, the present disclosure provides a feed premix, as provided in Compositions 37 or 38, wherein the feed premix further comprises at least one nutritional agent chosen from protein sources, carbohydrate sources, fat sources, or combination thereof.

In a first method, Method 1, the present disclosure provides a method for increasing methionine bioavailability in an animal, wherein the method comprises administering the composition of any one of Compositions 16 to 39 to the animal, and wherein the animal has at least one improved performance parameter as compared to an animal administered only the source of methionine.

In another method, Method 2, the present disclosure provides a method, as provided in Method 1, wherein the animal is a livestock animal, a companion animal, zoological animal, or a research animal.

In another method, Method 3, the present disclosure provides a method, as provided in Methods 1 or 2, wherein the animal is bovine, porcine, equine, ovine, or poultry.

In another method, Method 4, the present disclosure provides a method for increasing fermentation in a ruminant, wherein the method comprises administering the composition of any one of Compositions 15 to 39 to the ruminant, and wherein the ruminant has an increased level of volatile fatty acids as compared to a ruminant administered only the source of methionine.

In another method, Method 5, the present disclosure provides a method, as provided in Method 4, wherein the ruminant is bovine.

In another method, Method 6, the present disclosure provides a method for increasing milk fat, milk protein, and/or mild yield in a lactating ruminant, wherein the method comprises administering the composition of any one of Compositions 16 to 39 to the lactating ruminant, and wherein the lactating ruminant has an increased milk fat, milk protein, and/or milk yield as compared to a lactating ruminant administered only the source of methionine.

In another method, Method 7, the present disclosure provides a method, as provided in Method 6, wherein the lactating ruminant is a milk cow.

### EXAMPLES

The following examples illustrate various embodiments of the present disclosure.

### Example 1: Preparation of Agglomerated Composition

A solution was prepared by dissolving 30 g of arabic gum in 60 g of water. To this was added 8.6 g of cinnamaldehyde and 1.4 g of garlic oil, and a water/oil emulsion was prepared by mechanical stirring (i.e., dispersing homogenizer). The emulsion was sprayed with a rotary disc atomizer (with an emulsion temperature of 75°C, inlet temperature of 180°C, and outlet temperature of 87°C) into an atomizer vessel in which hot air was blown, and the produced free-flowing powder having an average particle size of 150 µm was collected in a cyclone. The final product contained 72.7% of arabic gum, 19.5% of cinnamaldehyde, 2.8% of garlic oil, and 5% of water by weight.

### Example 2: Stability of the Agglomerated Composition

The agglomerated compositions were mixed with a commercial inorganic based vitamin-mineral premix or a commercial organic based vitamin-mineral premix and stability of the cinnamaldehyde was monitored at regular intervals over 6 weeks. The results are present in Table 1 below.

| Table 1. Percentage of cinnamaldehyde | | |
|---|---|---|
| Week | Inorganic premix | Organic premix |
| 0 | 100 | 100 |
| 1 | 102 | 87 |
| 3 | 93 | 83 |
| 6 | 88 | 81 |

After 6 weeks, more that 80% of the cinnamaldehyde was still present.

### Example 3: Evaluation of Composition Comprising Methionine Source and Agglomerated Composition

A blended composition was prepared by mixing 965 kg of calcium salt of methionine hydroxy analog (i.e., MHA) and 35 kg of the agglomerated composition of Example 1. The performance of this blended composition was compared to that of MHA alone and the agglomerated composition alone in a single-flow continuous culture system. This system used forty-eight 2-L fermenters kept at 39°C and continuously stirred. Buffer solution (McDougall's buffer) and rumen fluid obtained from two fistulated Holstein cows fed a common diet were added (1,460 mL) to each fermenter in a 1:2 ratio at a target inflow and effluent rate of 6% per hour. Carbon dioxide was continuously flushed to the fermenters to maintain an anaerobic environment. Fermenters were fed 40 g of dry matter daily, split into 2 meals. These meals contained the individual components of the composition as well as the blend. Fermenters were allowed to run for a total of 10 days, with the first 7 days serving as an acclimation period and the last 3 days serving as time for sample collection. During sample collection effluent levels were recorded and one half of the effluent collected over the previous 24 h was taken as a subsample and frozen. These subsamples were compiled for each fermenter and stored for analysis. Fermenter pH was measured prior to feeding (0 h) and 0, 2, 4, and 8 h post feeding. At 0, 2, 4, and 8 h post feeding a 10 mL sample was taken from each fermenter and frozen at -20°C, composited by hour for each fermenter over the collection period, and analyzed. On 10 d of each fermenter run, fermenter contents were collected and stored at -20°C for analysis. The levels of fatty acids in the samples were analyzed using standard procedures.

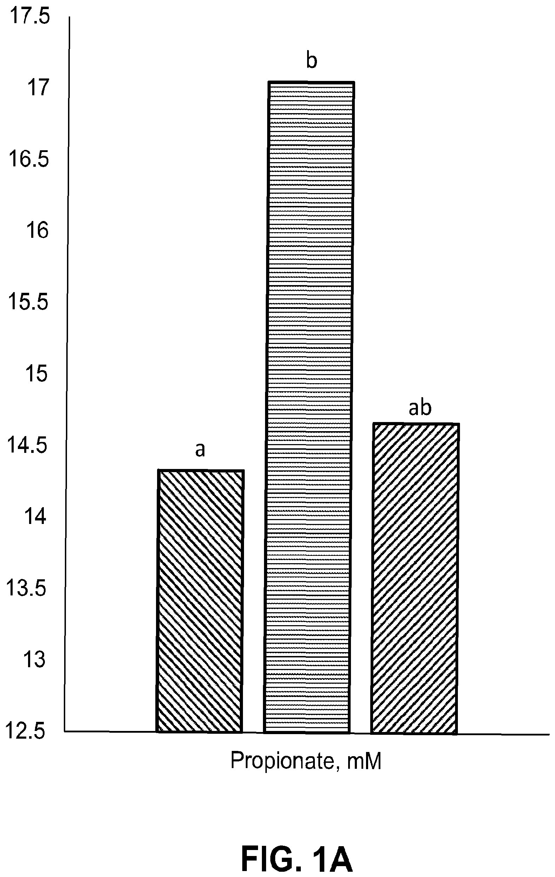

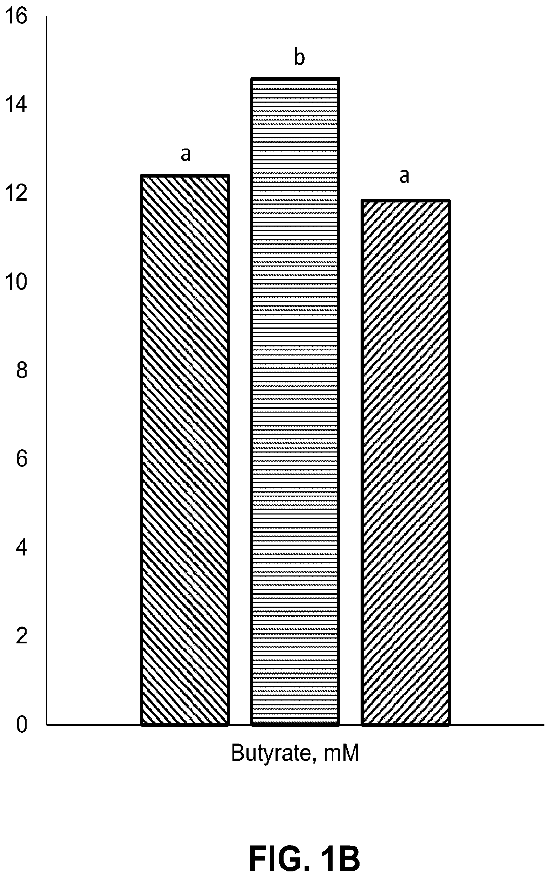

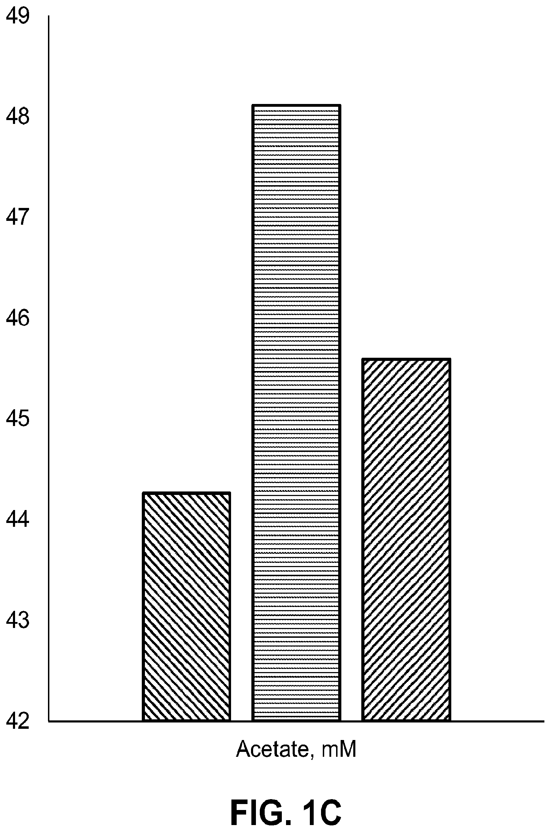

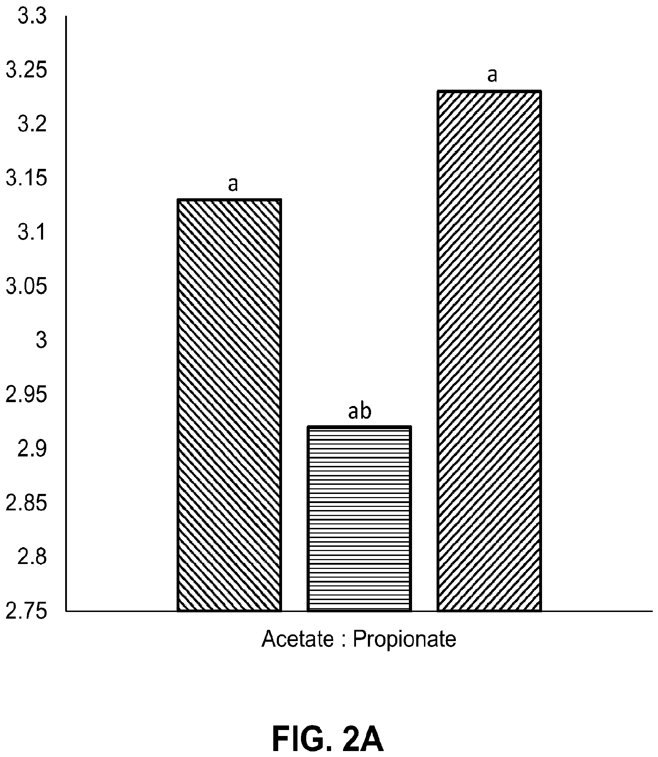

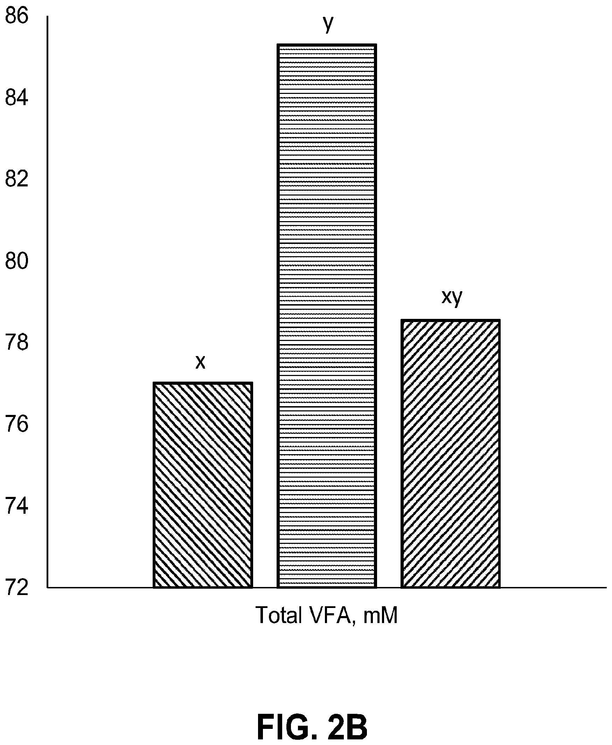

The blended composition improved fermentation by increasing the levels of volatile fatty acids (i.e., end products of rumen fermentation) by 11% relative to MHA or 8.6% relative to the agglomerated composition (see FIG. **2B**). More specifically, propionate (i.e., the substrate from which glucose is made) was increased by about 19% relative to MHA or 16% relative to the agglomerated composition. (FIG. **1A**) suggesting that the cow can make more glucose and possibly more lactose which will result in increased milk yield. This increase in milk yield for greater lactose concentrations is due to the role lactose has as an osmotic regulator for milk synthesis.
The following clauses define particular aspects and embodiments of the invention:
Clause 1. A composition comprising at least two essential oils dispersed in a matrix.
Clause 2. The composition of clause 1, wherein the at least two essential oils are chosen from allicin, amyl cinnamic aldehyde, amyl salicylate, anethole, anisic aldehyde, borneol, bornyl acetate, cadinene, camphene, camphor, carvacrol, carveol, carvone, cinnamaldehyde, cineol, citral, citronellal, citronellol, cuminic alcohol, cuminic aldehyde, cymene, dipentene, estragol, ethyl vanillin, eucalyptol, eugenol, eugenyl acetate, geraniol, geranyl acetate, guaiacol, isoeugenol, limonene, linalool, linalyl acetate, listea cubea, menthol, menthyl salicylate, methylchavicol, methyl salicylate, paracymene, perillaldehyde, phellandrene, pinene, piperonal, piperonyl acetate, piperonyl alcohol, pulegone, sabinene, terpinene, terpineol, terpinyl acetate, thujone, thymol, vanillin, or combinations thereof.
Clause 3. The composition of clauses 1 or 2, wherein the matrix comprises at least one agglomerating agent chosen from a complex carbohydrate, a protein, or a combination thereof, wherein the complex carbohydrate is chosen from arabic gum, agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum, and the protein is chosen from collagen, gelatin, milk protein, egg protein, pea protein, soy protein, wheat protein, zein protein, isolate or hydrolysate of any of the foregoing, or modified version of any of the foregoing.
Clause 4. The composition of any one of clauses 1 to 3, wherein the at least two essential oils are present in an amount from about 15% to about 30% by weight of the composition, and the matrix is present in an amount from about 65% to about 80% by weight of the composition.
Clause 5. The composition of any one of clauses 1 to 4, further comprising less than about 10% of water by weight, wherein the total amount of the at least two essential oils, the matrix, and water equals 100% by weight.
Clause 6. The composition of clause 1, wherein the at least two essential oils comprise or consist of cinnamaldehyde and garlic oil and the matrix comprises arabic gum.
Clause 7. The composition of clause 6, wherein cinnamaldehyde is present in an amount from about 17.5% to about 21.5% by weight of the composition, garlic oil is present in an about from about 2.5% to about 3.1% by weight of the composition, and arabic gum is present in an amount from about 70% to about 75% by weight of the composition.
Clause 8. The composition of any one of clauses 1 to 7, wherein the composition comprises particles having an average diameter particle size from about 50 micrometers to about 250 micrometers.
Clause 9. A composition comprising a source of methionine and a plurality of agglomerated particles, the plurality of agglomerated particles comprising at least one essential oil and at least one agglomerating agent.
Clause 10. The composition of clause 9, wherein the source of methionine comprises compounds of Formula (I): 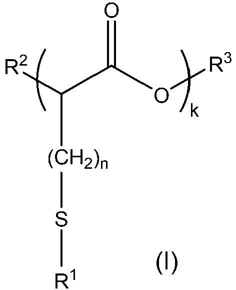 wherein:
   R¹ is methyl or ethyl;
   R² is NH₂ or OH;
   R³ is hydrogen, C₁-C₆ alkyl, or a metal ion chosen from calcium, chromium, cobalt, copper, iron, magnesium, manganese, silver, sodium, or zinc;
   k is an integer from 1 to 10; and
   n is an integer of 1 or 2.
Clause 11. The composition of clause 10, wherein R¹ is methyl, R² is OH, R³ is calcium, k is from 1 to 5, and n is 2.
Clause 12. The composition of any one of clauses 9 to 11, wherein the at least one essential oil is chosen from allicin, amyl cinnamic aldehyde, amyl salicylate, anethole, anisic aldehyde, borneol, bornyl acetate, cadinene, camphene, camphor, carvacrol, carveol, carvone, cinnamaldehyde, cineol, citral, citronellal, citronellol, cuminic alcohol, cuminic aldehyde, cymene, dipentene, estragol, ethyl vanillin, eucalyptol, eugenol, eugenyl acetate, geraniol, geranyl acetate, guaiacol, isoeugenol, limonene, linalool, linalyl acetate, listea cubea, menthol, menthyl salicylate, methylchavicol, methyl salicylate, paracymene, perillaldehyde, phellandrene, pinene, piperonal, piperonyl acetate, piperonyl alcohol, pulegone, sabinene, terpinene, terpineol, terpinyl acetate, thujone, thymol, vanillin, or combinations thereof.
Clause 13. The composition of any one of clauses 9 to 12, wherein the at least one agglomerating agent is chosen from a complex carbohydrate, a protein, or a combination thereof, wherein the complex carbohydrate is chosen from arabic gum, agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum, and the protein is chosen from collagen, gelatin, milk protein, egg protein, pea protein, soy protein, wheat protein, zein protein, isolate or hydrolysate of any of the foregoing, or modified version of any of the foregoing.
Clause 14. The composition of any one of clauses 9 to 13, wherein the source of methionine is present in an amount from about 90% to about 99% by weight of the composition, and the plurality of agglomerated articles is present in an amount from about 1% to about 10% by weight of the composition,
Clause 15. The composition of any one of clauses 9 to 14, wherein the plurality of agglomerated particles comprises from about 15% to about 30% by weight of the at least one essential oil and from about 65% to about 80% by weight of the at least one agglomerating agent.
Clause 16. The composition of clause 9, wherein the plurality of agglomerated particles comprise or consist of cinnamaldehyde and garlic oil as the at least one essential oil and arabic gum as the at least one agglomerating agent.
Clause 17. The composition of clause 16, wherein cinnamaldehyde is present in an amount from about 17.5% to about 21.5% by weight, garlic oil is present in an about from about 2.5% to about 3.1% by weight, and arabic gum is present in an amount from about 70% to about 75% by weight of the plurality of agglomerated particles.
Clause 18. The composition of clauses 16 or 17, wherein the source of methionine is present in an amount from about 96% to about 99% by weight of the composition, and the plurality of agglomerated articles is present in an amount from about 1% to about 4% by weight of the composition.
Clause 19. The composition of any one of clauses 16 to 18, wherein the source of methionine is 2-hydroxy-4-(methylthio)butanoic acid calcium salt.
Clause 20. The composition of any one of clauses 9 to 19, wherein the plurality of agglomerated particles having an average diameter particle size from about 50 micrometers to about 250 micrometers.
Clause 21. The composition of any one of clauses 9 to 20, which is a free flowing powder.
Clause 22. A feed premix comprising the composition of any one of clauses 9 to 21 and at least one nutritional agent chosen from protein source, carbohydrate source, fat source, or a combination thereof.
Clause 23. The feed premix of clause 22, further comprising at least one agent chosen from vitamins, minerals, amino acids, amino acid analogs, antioxidants, organic acids, polyunsaturated fatty acids, enzymes, prebiotics, probiotics, postbiotics, herbs, pigments, pharmaceutically active agents, or combinations thereof.
Clause 24. A method for increasing methionine bioavailability in an animal, the method comprising administering the composition of any one of clauses 9 to 21 or the feed premix of clauses 22 or 23 to the animal, wherein the animal has at least one improved performance parameter as compared to an animal administered only the source of methionine.
Clause 25. The method of clause 24, wherein the animal is a livestock animal, a companion animal, zoological animal, or a research animal.
Clause 26. The method of clauses 24 or 25, wherein the animal is bovine, porcine, equine, ovine, or poultry.
Clause 27. A method for increasing fermentation in a ruminant, the method comprising administering the composition of any one of clauses 9 to 21 or the feed premix of clauses 22 or 23 to the ruminant, wherein the ruminant has an increased level of volatile fatty acids as compared to a ruminant administered only the source of methionine.
Clause 28. The method of clause 27, wherein the ruminant is bovine.
Clause 29. A method for increasing milk protein content and/or mild yield in a lactating ruminant, the method comprising administering the composition of any one of clauses 9 to 21 or the feed premix of clauses 22 or 23 to the lactating ruminant, wherein the ruminant has an increased milk protein content and/or milk yield as compared to a lactating ruminant administered only the source of methionine.
Clause 30. The method of clause 29, wherein the lactating ruminant is a milk cow.

## Claims

1. A composition comprising a source of methionine and a plurality of agglomerated particles, the plurality of agglomerated particles comprising at least two essential oils dispersed in a matrix, wherein the matrix comprises at least one agglomerating agent comprising arabic gum, and the at least two essential oils consist of garlic oil and cinnamaldehyde.

2. The composition of claim 1, wherein the source of methionine comprises a compound of Formula (I): 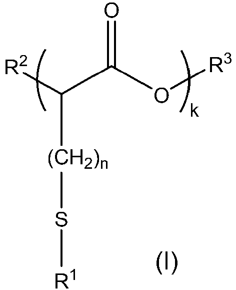 wherein:
R¹ is methyl or ethyl;
R² is NH₂ or OH;
R³ is hydrogen, C₁-C₆ alkyl, or a metal ion chosen from calcium, chromium, cobalt, copper, iron, magnesium, manganese, silver, sodium, or zinc;
k is an integer from 1 to 10; and
n is an integer of 1 or 2.

3. The composition of claim 2, wherein R¹ is methyl, R² is OH, R³ is calcium, k is from 1 to 5, and n is 2.

4. The composition of any one of claims 1 to 3, wherein the source of methionine is present in an amount from about 90% to about 99% by weight of the composition, and the plurality of agglomerated articles is present in an amount from about 1% to about 10% by weight of the composition.

5. The composition of claim 1, wherein cinnamaldehyde is present in an amount from about 17.5% to about 21.5% by weight, garlic oil is present in an about from about 2.5% to about 3.1% by weight, and arabic gum is present in an amount from about 70% to about 75% by weight of the plurality of agglomerated particles.

6. The composition of any one of claim 1-5, wherein the source of methionine is present in an amount from about 96% to about 99% by weight of the composition, and the plurality of agglomerated articles is present in an amount from about 1% to about 4% by weight of the composition.

7. The composition of any one of claims 1-6, wherein the source of methionine is 2-hydroxy-4-(methylthio)butanoic acid calcium salt.

8. The composition of any one of claims 1-7, wherein the plurality of agglomerated particles having an average diameter particle size from about 50 micrometers to about 250 micrometers.

9. The composition of any one of claims 1-8, in which the composition is a free-flowing powder.

10. The composition of any one of claims 1-9, wherein the at least one agglomerating agent further comprises a complex carbohydrate, a protein, or a combination thereof, wherein the complex carbohydrate is chosen from agar, albizia gum, alginate, arabinoxylan, beta glucan, carob gum, carrageenan, cellulose, cellulose derivative, chicle gum, chitosan, curdlan, dammar gum, dextran, diutan gum, fenugreek gum, fucoidan, galactomannan, gellan gum, ghatti gum, glucomannan, guar gum, hakea gum, honey locust gum, hupu gum, karaya gum, khaya gum, lignin, locust bean gum, maltodextrin, mastic gum, pectin, pullulan, starch, modified starch, tamarind gum, tara gum, tragacanth gum, welan gum, or xanthan gum, and the protein is chosen from collagen, gelatin, milk protein, egg protein, pea protein, soy protein, wheat protein, zein protein, isolate or hydrolysate of any of the foregoing, or modified version of any of the foregoing.

11. The composition of any one of claims 1-10, wherein the plurality of agglomerated particles is devoid of coatings, outer shells, and/or hydrophobic layers.

12. The composition of any one of claims 1-11, wherein the cinnamaldehyde and garlic oil are present at a ratio of about 7 to 1.

13. The composition of any one of claims 1-12, wherein the composition further comprises an antioxidant, a surfactant, a filler, and/or a binder.

14. A feed premix comprising the composition of any one of claims 1-13 and at least one nutritional agent chosen from a protein source, carbohydrate source, fat source, or a combination thereof.

15. The feed premix of claim 14, further comprising at least one agent chosen from vitamins, minerals, amino acids, amino acid analogs, antioxidants, organic acids, polyunsaturated fatty acids, enzymes, prebiotics, probiotics, postbiotics, herbs, pigments, pharmaceutically active agents, or combinations thereof.
